Europäisches Patentamt

European Patent Office

Office européen des brevets

(11) Publication number: 0 177 319
A2

# EUROPEAN PATENT APPLICATION

(21) Application number: 85306965.6

(22) Date of filing: 30.09.85

(51) Int. Cl.⁴: G 06 K 9/22
G 06 K 9/34

(30) Priority: 28.09.84 JP 201519/84

(43) Date of publication of application:
09.04.86 Bulletin 86/15

(84) Designated Contracting States:
DE FR GB

(71) Applicant: Kabushiki Kaisha Toshiba
72, Horikawa-cho Saiwai-ku
Kawasaki-shi Kanagawa-ken 210(JP)

(72) Inventor: Hidai, Yutaka c/o Patent Division
Kabushiki Kaisha Toshiba 1-1 Shibaura 1-chome
Minato-ku Tokyo 105(JP)

(72) Inventor: Ooi, Katsunori c/o Patent Division
Kabushiki Kaisha Toshiba 1-1 Shibaura 1-chome
Minato-ku Tokyo 105(JP)

(72) Inventor: Nakamura, Yoshikatsu c/o Patent Division
Kabushiki Kaisha Toshiba 1-1 Shibaura 1-chome
Minato-ku Tokyo 105(JP)

(72) Inventor: Kurosawa, Yoshiaki c/o Patent Division
Kabushiki Kaisha Toshiba 1-1 Shibaura 1-chome
Minato-ku Tokyo 105(JP)

(74) Representative: Freed, Arthur Woolf et al,
MARKS & CLERK 57-60 Lincoln's Inn Fields
London WC2A 3LS(GB)

(54) Pattern segmentation system.

(57) A pattern segmentation system has a writing pen (11) with a coil (11b) wound therearound for generating a magnetic field, and a tablet (12) having a number of conductive wires (12a, 12b) arranged in the X and Y directions. When a character is written on the tablet (12) by the pen (11), scanners (13, 14) detect a voltage induced in the conductive wires (12a, 12b) by the magnetic field of the coil (11b) of the pen. The coordinates of the character and the distance of the pen from the surface of the tablet (12) are determined from the level of the induced voltage. When the distance exceeds a predetermined value, the time for which the pen (11) is separated from the tablet (12) is measured by a timer (21). When the time measured by the timer (21) exceeds a predetermined time, a signal representing a character boundary is produced, and character segmentation is performed in accordance with the signal.

./...

F I G. 1

- 1 -

## Pattern segmentation system

The present invention relates to a pattern segmentation system and, more particularly, to a pattern segmentation system for segmenting a character pattern or discrete pattern written it on a tablet or the like.

In order to achieve person-to-computer communication, any specific technique must not be demanded. For this reason, techniques for recognizing handwritten characters and graphic patterns are under development. In the recognition of handwritten characters, character segmentation for detecting a boundary between characters presents a problem. In the recognition of handwritten graphic patterns, segmentation of characters and discrete graphic patterns (o, Δ, x and the like) presents a problem. In view of this, a method using a character frame is known for segmenting characters and discrete graphic patterns. In this method, as long as a character is written within the character frame, it is recognized as a single character. Thus, when the writing exceeds the spatial limits of the character frame, input of a single character is determined to have been completed. However, in this method, since the writing range of a character or a graphic pattern is limited, the size and position for inputting a character or a graphic pattern are likewise limited, resulting in input inconvenience.

According to another method, a key is operated after inputting each character to designate a character boundary. In this method, although the size and position of a character or a graphic pattern are not limited, need for a key operation for each input character results in poor operability.

It is an object of the present invention to provide a pattern segmentation system with excellent operability, wherein the size and position of an input character or graphic pattern are not limited when such a character or graphic pattern is handwritten.

According to the pattern segmentation system of the present invention, when a character or graphic pattern is written on a tablet by a pen, the distance of a pen raised from the tablet after each stroke and the sustained time thereof are detected, and a boundary between characters or graphic patterns is determined from the distance and sustained time.

This invention can be more fully understood from the following detailed description when taken in conjunction with the accompanying drawings, in which:

Fig. 1 is a block diagram of a pattern segmentation system according to an embodiment of the present invention;

Fig. 2 is a perspective view showing a pen and the wire matrix of a tablet;

Fig. 3 is a diagram showing the relationship between the magnetic fields generated by the pen and the wires of the tablet;

Fig. 4 is a graph showing the distribution of a voltage obtained from the tablet;

Fig. 5 is a diagram showing the distribution of magnetic fields in the direction of height from the tablet;

Fig. 6 is a diagram showing a character written on the tablet;

Figs. 7A to 7E are timing charts of the signals in the circuit shown in Fig. 1; and

Fig. 8 is a side view of a tablet and a pen used in another embodiment of the present invention.

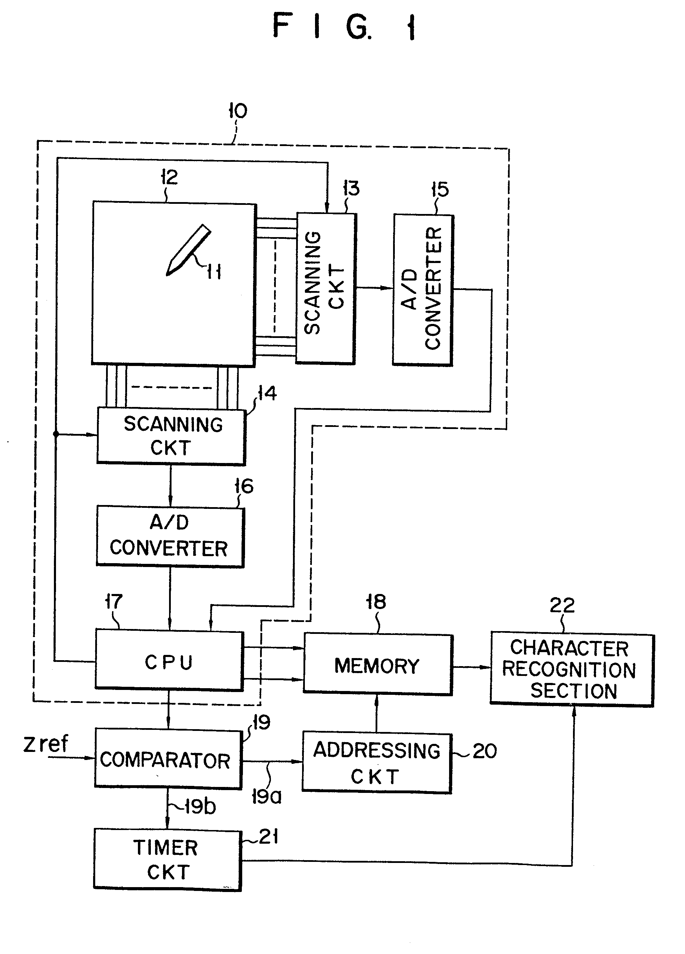

Referring to Fig. 1, a character input section 10 has a tablet 12 on which a character is handwritten by a pen 11. A plurality of conductive wires 12a and 12b (Fig. 2) extend in a matrix pattern at intervals of, e.g., 1 mm (as will be described later) on the tablet 12. Horizontal and vertical wires 12a and 12b are respectively connected to line and column scanning circuits 13 and 14. The scanning circuits 13 and 14 comprise switching circuits which sequentially scan the wires. Outputs of the circuits 13 and 14 are connected to A/D converters 15 and 16, respectively. Outputs of the A/D converters 15 and 16 are connected to a CPU 17.

The CPU 17 determines the X- and Y-coordinates of an input character in accordance with output data from the A/D converters 15 and 16. The CPU 17 supplies to the scanning circuits 13 and 14 a clock signal for determining their scanning timing. The X- and Y-coordinate data obtained by the CPU 17 is led to a coordinate memory 18. The voltage level data obtained by the CPU 17 is led to an input terminal of a comparator 19. The comparator 19 is included in order to discriminate the distance of the pen 11 from the tablet 12. The reference terminal of the comparator 19 receives, as reference data, voltage level data corresponding to a predetermined distance. The comparator 19 passes a touch switch signal to a line 19a when the pen 11 is in contact with the tablet 12, and supplies a signal onto a line 19b when the pen 11 is lifted to a height exceeding a predetermined distance from the tablet 12. The lines 19a and 19b are connected to an addressing circuit 20 and a timer circuit 21, respectively. The timer circuit 21 measures a time period during which the pen 11 is lifted, and produces a character segmentation signal upon detecting a time exceeding a predetermined time period.

The addressing circuit 20 generates an address signal in response to an output signal, i.e., a stroke signal from the comparator 19 received through the line 19a. The address output terminal of the addressing circuit 20 is connected to the addressing terminal of the memory 18.

The readout terminal of the coordinate memory 18 is connected to a character recognition section 22. The character recognition section 22 comprises a known character recognition circuit which can recognize characters in accordance with coordinate data from the coordinate memory 18 and character segmentation signal from the comparator 19.

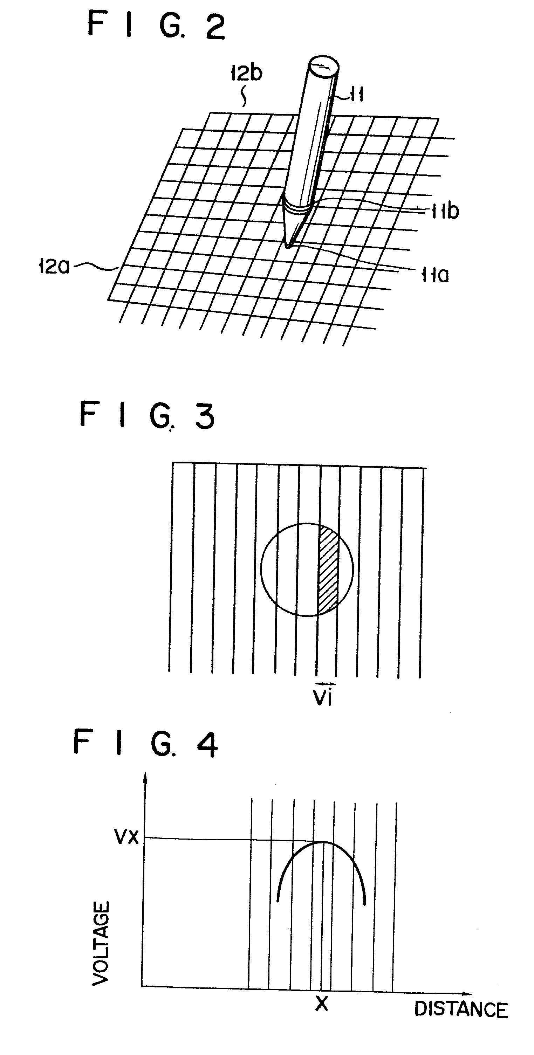

As shown in an equivalent circuit diagram of Fig. 2, one end of each column wire 12b of the tablet 12 is commonly connected to the scanning circuit 13, and the other end thereof is connected to the scanning circuit 14. The pen 11 for writing a character on the tablet 12 includes a touch switch 11a mounted at the pen tip, and a coil 11b wound around the distal portion of the pen near the pen tip. When an alternating current is supplied to the coil 11b, magnetic fields are generated from the coil 11b. When the magnetic fields cross the column wires 12b, a voltage is induced between adjacent wires. The induced voltage is proportional to the number of magnetic fields which have crossed the wires. Referring to Fig. 3, the induced voltage is proportional to the area between adjacent wires enclosed by the coil 11b. That is, a maximum voltage is induced between adjacent wires having lengths corresponding to the diameter of the coil 11b.

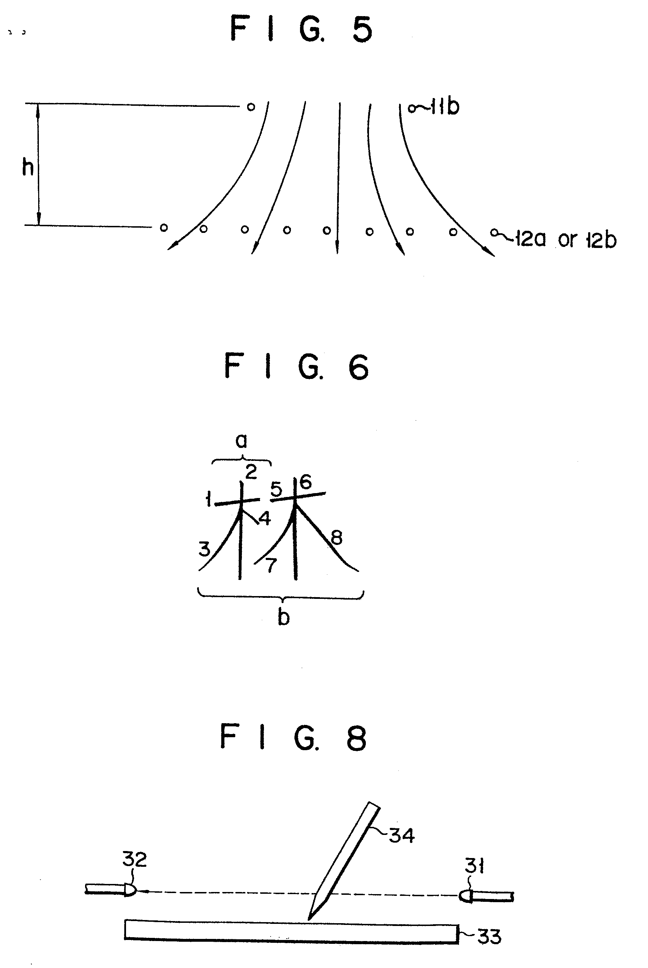

Fig. 4 shows a graph representing the voltages induced in the tablet wires 12a and 12b by the magnetic fields of the coil 11b. Referring to Fig. 4, a maximum voltage Vx corresponds to the distance, i.e., height h of the pen 11 from the tablet 12. When the height h increases, the magnetic force acting on the tablet 2 is decreased and the voltage Vx is likewise decreased, as shown in Fig. 5. Therefore, the height h can be determined from the voltage Vx.

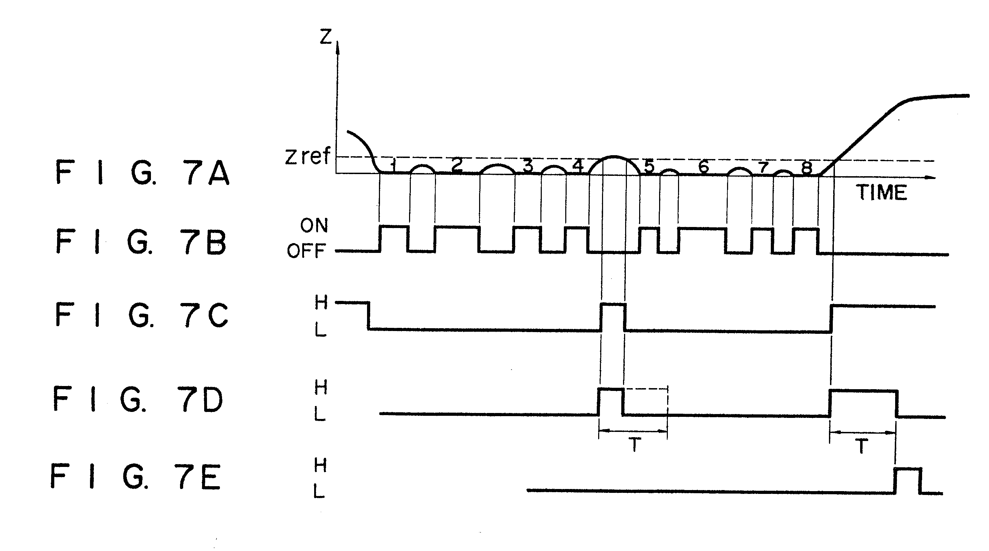

The mode of operation of the above embodiment will be described below. When a character as shown, for example, in Fig. 6, is to be written on the tablet 12 by the pen 11, the character is written in 8 strokes. When a first stroke, character element 1, is written on the tablet 12, the switch 11a at the pen tip is turned ON. At this time, since the pen height h is 0, pen height data Z represents 0. This state is indicated by the position of the stroke 1 in Fig. 7A. Upon writing the first stroke 1, a voltage is induced between wires of the tablet 12, as described hereinbefore. More specifically, a voltage at a single point of the pen 11 is induced as shown in Fig. 4, and voltage signals corresponding to the X- and Y-coordinates of this point are picked up by the scanning circuits 13 and 14. Therefore, during the first stroke, voltage signals are sequentially produced by the scanning circuits 13 and 14 as coordinate signals corresponding to a plurality of points. The voltage signals are converted into digital data by the A/D converters 15 and 16, and then supplied to the CPU 17 to be converted into coordinate data. Since the wires of the tablet 12 are spaced at relatively large intervals of 1 mm as described before, the coordinate data obtained from the tablet 12 is interpolated to obtain coordinate data accurate to 0.1 mm.

The coordinate data obtained in this manner is transferred from the CPU 17 to the coordinate memory 18. At this time, the CPU 17 supplies to the comparator 19, both an ON signal (Fig. 7B) of the touch switch 11a and pen height data Z corresponding to the voltage Vx. A touch signal is supplied as a stroke signal to the addressing circuit 20 onto the line 19a. In response to this stroke signal, the addressing circuit 20 supplies address data to the memory 18. The memory 18 sequentially stores the coordinate data received from the CPU 17 at addresses designated by the address data. The height data Z is compared with the reference height data Zref. When the height data Z has a value smaller than that of the reference height data Zref, the comparator 20 does not produce a signal onto the line 19b. Therefore, in this state, the timer circuit 21 is in the OFF state.

When the first stroke 1 is completed and a shift to the second stroke 2 is made, the touch switch 11a is turned off. At this time, the comparator 19 does not produce a stroke signal, the addressing circuit 20 does not generate address data and the memory 18 does not store coordinate data. Pen height data Z generated during the shift to the second stroke 2 is higher than 0, but lower than the reference data Zref. Therefore, the comparator 19 does not produce a height signal onto the line 19b.

In the second stroke 2, when the touch switch 11a is turned on again, as shown in Fig. 7B, and the voltage signal is produced by the tablet 12, the coordinate data corresponding to the second stroke 2 is sequentially stored in the memory 18. In this manner, when character elements up to the fourth stroke 4, i.e., the left half a of the character shown in Fig. 6, are written on the tablet 12, and a shift to the fifth stroke 5 of the right half is made, the pen 11 is normally raised to a level slightly higher than the height during the first to fourth strokes. Therefore, the height data Z has a value larger than that of the reference height data .Zref, as shown in Fig. 7A. An ON signal then is supplied from the comparator 19 to the timer circuit 21 through the line 19b. The timer circuit 21 is set in response to the leading edge of the ON signal and is reset in response to the falling edge thereof. The timer circuit 21 is reset at preset time T.

When the pen 11 shifts from the fourth to the fifth stroke, the pulse width of the ON signal from the comparator 19 is less than the preset time T of the timer circuit 21. Therefore, the timer circuit 21 is reset before time out (Fig. 7D).

For the fifth to eighth strokes 5 to 8, the corresponding coordinate data are stored in the coordinate memory 18 as in the case of the first to fourth strokes 1 to 4. When the eighth stroke is completed, input of the character b shown in Fig. 6 is completed and the pen 11 is raised to a level higher than the reference height Zref. Thus, an ON signal is generated by the comparator 19. The ON signal has a pulse width greater than the time T of the timer circuit 21 since the sustaining time of the raised pen is longer than the time T. Therefore, the timer circuit 21 generates a time out signal as shown in Fig. 7E. The time out signal is supplied as a character boundary signal to the character recognition section 22. Since the coordinate data corresponding to the first to eighth strokes of the character b shown in Fig. 6 are supplied from the memory 18 to the character recognition section 22, the character b is recognized from the coordinate data upon detecting that these coordinate data represent a single character. Character recognition is performed by a known method.

In the Japanese language, pattern a forms by itself, a character meaning "tree." In this invention, when two identical patterns a are written side by side, they can be recognized as two identical characters, not as one character b. That is, the user has written the two identical characters, and the space between strokes 4 and 5 is the space between these consecutive characters. Therefore, the time during which the raised pen is sustained is longer than time T (Fig. 7D), and a character boundary signal is generated after the user has made stroke 4 and before he has made stroke 5.

According to the present invention, since a character boundary is determined in accordance with the height data and sustaining time data of the raised pen, a boundary between handwritten characters can be easily recognized without being limited by the size and position of the characters.

Fig. 8 shows a case wherein a pressure sensitive tablet 33 is used as a tablet. The pressure sensitive tablet 33 produces a coordinate signal of a position depressed by a pen 34 of an operator. When the pressure sensitive tablet 33 is used, a pen height cannot be detected by a magnetic method as in the first embodiment. Therefore, in this case, the pen height is photoelectrically detected using a photointerrupter. More specifically, a photoemissive member 31 and a photoelectric member 32 are opposed to each other at a predetermined height from the tablet 33. In this embodiment, when the pen 34 is released from the tablet 33 and interruption of light from the photoemissive member 31 is cancelled, a character boundary signal is produced. Thus, recognition of a single character is performed.

- 1 -                    0177319

Claims:

1. A pattern segmentation system comprising:
writing means (11);

coordinate data output means (12 to 17) having a writing surface for converting a predetermined pattern written on the writing surface by said writing means (11) into coordinate data;

distance data output means (19) for outputting data corresponding to a distance between the writing surface and said writing means (11);

time measuring means (21), connected to said distance data output means (19), for measuring a time for which distance data having a value exceeding a predetermined distance is generated from said distance data output means, and for generating an output signal when a measurement value exceeds a predetermined value; and

means (22) for determining a boundary of the pattern in accordance with the output signal from said time measuring means.

2. A system according to claim 1, characterized in that said writing means comprises a writing pen (11) with means (11b) for generating a magnetic field; and said coordinate data output means comprises a number of first conductive wires (12a) arranged in a first direction, a number of second conductive wires (12b) arranged in a second direction perpendicular to the first direction, and means (13, 14) for detecting a voltage induced in said first and second conductive wires by the magnetic field generated by said magnetic field generating means of said writing pen.

3. A system according to claim 1, characterized in that said writing means comprises a writing pen (11) with means (11b) for generating a magnetic field; said coordinate data output means comprises a number of first conductive wires (12a) arranged in a first direction, a number of second conductive wires (12b) arranged in a second direction perpendicular to the first direction, and means (13, 14) for detecting a voltage induced in said first and second conductive wires by the magnetic field generated by said magnetic field generating means of said writing pen (11); and said distance data output means comprises means (19) for converting a value of the voltage detected by said voltage detecting means into distance data.

4. A system according to claim 1, characterized in that said distance data output means comprises means (19) for comparing the distance data with distance data corresponding to a predetermined distance and for generating an output pulse for distance data having a value exceeding the predetermined distance, and said time measuring means is means (21) for generating an output signal when a pulse width of the output pulse from said comparing means exceeds a predetermined value.

5. A system according to claim 1, characterized in that said coordinate data output means comprises a pressure sensitive tablet (33) which produces an output signal upon a writing pressure applied by said writing means (34) thereto.

6. A system according to claim 1, characterized in that said distance data output means comprises means (31, 32), arranged at a predetermined distance from the writing surface, for optically detecting a position of said writing means (34).

# F I G. 1

# F I G. 2

# F I G. 3

$\vec{Vi}$

# F I G. 4

Vx

VOLTAGE

X

DISTANCE

# F I G. 5

h

∘~11b

∘~12a or 12b

# F I G. 6

a

2

1  5  6

4

3  7  8

b

# F I G. 8

~34

32

31

~33

FIG. 7A
FIG. 7B
FIG. 7C
FIG. 7D
FIG. 7E